# FASCICULE DE BREVET EUROPEEN

(11) **EP 2 176 101 B1**
(45) Date de publication et mention de la délivrance du brevet: **15.06.2011**
(21) Numéro de dépôt: 08806151.0
(22) Date de dépôt: 01.07.2008
(51) Int. Cl.: B60S 1/50, B60S 1/48

(54) **ENSEMBLE POUR LE RECHAUFFAGE DE L'EAU DE LAVAGE DES SURFACES VITREES D'UN VEHICULE AUTOMOBILE**
VORRICHTUNG ZUR WIEDERAUFWÄRMUNG DES WASSERS EINER SCHEIBENWASCHANLAGE EINES KRAFTFAHRZEUGS
SET FOR REHEATING WASHING WATER FOR GLASS SURFACES OF A MOTOR VEHICLE

(30) Priorité: 11.07.2007 FR 0756403
(43) Date de publication de la demande: 21.04.2010
(73) Titulaire: Peugeot Citroën Automobiles SA, 78140 Vélizy-Villacoublay (FR)
(72) Inventeur: JEUFFE, Gérard, F-78580 Bazemont (FR); MAGNIER, Nicolas, F-78000 Versailles (FR)
(86) Numéro de dépôt international: PCT/FR2008/051227
(87) Numéro de publication internationale: WO 2009/007645

(56) Documents cités:
- EP-B- 0 213 414
- FR-A- 2 875 763
- FR-A- 2 884 477
- US-A1- 2004 069 252

## Description

La présente invention est relative à ensemble permettant de réaliser, sans apport d'énergie calorifique autre que celle déjà disponible lors du fonctionnement du moteur d'un véhicule automobile, le réchauffage de l'eau de lavage de diverses surfaces vitrées de ce véhicule, comme celle de son pare brise avant ou de sa lunette arrière, voire des glaces de ses projecteurs de lumière ou de ses rétroviseurs extérieurs. Le document FR 28 884 477 A décrit un ensemble pour le réchauffage de l'eau de lavage des surfaces vitrées d'un vehicule automobile selon le préambule de la revendication 1.

L'invention se rapporte plus particulièrement à un ensemble du genre de celui ayant fait l'objet du brevet français FR 2 875 763 au nom de la Demanderesse, selon lequel le dispositif envisagé comporte, montés dans le compartiment moteur du véhicule, d'une part une boîte de dégazage sous pression, faisant partie du circuit de refroidissement de ce moteur, et d'autre part au moins un réservoir d'eau de lavage, ce réservoir étant associé à une pompe de circulation prélevant l'eau dans celui-ci et la délivrant à des gicleurs de distribution et de répartition sur les surfaces vitrées à nettoyer, le réservoir entourant au moins partiellement la boîte de dégazage en ménageant entre eux un espace de séparation d'épaisseur déterminée, un corps creux à double cloison étant intégré dans cet espace pour délimiter un volume isolant thermique, fermé sur lui-même.

La présence de ce corps creux faisant fonction d'isolant thermique, disposé entre la boîte de dégazage et le réservoir de liquide de lavage, limite très sensiblement la vitesse avec laquelle s'effectue le transfert des calories de cette boîte vers le réservoir de sorte que le circuit de refroidissement dans lequel est montée cette dernière ne subit aucun choc thermique brutal, ce transfert des calories de la boîte vers le réservoir étant progressif et continu.

De préférence et selon une autre caractéristique du dispositif conforme à ce brevet antérieur, le corps creux isolant thermique, fermé sur lui-même, logé dans l'espace intermédiaire, constitue une enceinte placée sous vide.

On sait que le refroidissement du moteur et de divers accessoires directement liés à celui-ci s'effectue, dans un véhicule automobile, au moyen d'un circuit de refroidissement rempli d'un liquide approprié, usuellement de l'eau additionnée d'un produit propre à limiter dans une certaine mesure sa vaporisation, ce circuit traversant notamment la culasse du moteur par des tubulures où l'eau est admise sous pression depuis une pompe de circulation, des piquages et canalisations de liaison mettant ce circuit en communication avec un radiateur devant lequel tourne un ventilateur dont la mise en route est commandée dès que la température dans le circuit atteint un seuil prédéterminé.

Sur ce circuit de refroidissement, présent sur tout véhicule automobile, il est nécessaire de prévoir un volume libre en communication avec lui, confiné dans un ensemble clos, qu'il est convenu d'appeler « boîte de dégazage » et dont le rôle est d'assurer la séparation du liquide et de sa vapeur, le cas échéant de la fraction des gaz de combustion et de l'air extérieur qui se sont introduits dans le circuit lors du fonctionnement du moteur ou à l'occasion du remplissage de ce circuit avec le liquide qu'il contient.

Cette boîte de dégazage assure une fonction essentielle pour la régulation et la mise en sécurité du circuit de refroidissement, en particulier en abaissant le niveau de gaz contenu dans ce circuit à une valeur limite fixée par le tarage correspondant d'une soupape d'échappement, la présence d'une quantité de gaz trop importante pouvant avoir des conséquences graves sur le fonctionnement satisfaisant du circuit , comme par exemple conduire à désamorcer la pompe de circulation, à endommager la culasse du moteur en cas de refroidissement insuffisant, plus encore, si la circulation du liquide n'atteint pas un débit approprié, à créer des phénomènes de cavitation qui peuvent dégrader certaines pièces essentielles, ou enfin à accroître les rejets d'eau vers l'extérieur par un orifice de trop plein prévu sur le circuit, ces divers effets étant la conséquence d'une présence de gaz excessive.

Le rôle déterminant de la boîte de dégazage exige cependant, pour que celle-ci atteigne l'efficacité requise, non seulement qu'elle soit localisée avec précision au-dessus du niveau de la culasse et du radiateur, mais encore que la montée en température du liquide dans le circuit de refroidissement soit relativement rapide, de l'ordre de 15 minutes pour atteindre 60° à 80° dans un moteur diesel, également les mêmes valeurs mais en 5 minutes seulement pour un moteur à essence, avec un volume de liquide généralement compris entre 1,5 et 3 litres, et que cette température soit en permanence maintenue au voisinage immédiate de ces niveaux, sans à coups notables.

Or, comme exposé dans ce brevet, il s'avère que si, en fonctionnement, se produit une perte sensible et brutale de calories au niveau de la boîte de dégazage, conduisant à une baisse de pression dans le circuit et à un accroissement corrélatif de la vaporisation du liquide, les inconvénients précités qui apparaissent immédiatement, risquent de provoquer un refroidissement insuffisant de la culasse et des autres parties du véhicule intéressées par le circuit, avec le risque maximal de provoquer la rupture du moteur et l'immobilisation immédiate du véhicule, entraînant des coûts de réparation excessifs.

Cependant, du fait même de ce transfert contrôlé et progressif des calories de la boîte de dégazage vers le réservoir d'eau de lavage, réalisé conformément aux dispositions caractéristiques de la solution proposée par le brevet français FR 2 875 763 précité, l'élévation de température dans ce réservoir est parfois insuffisante pour assurer un nettoyage efficace de la surface vitrée sur laquelle cette eau est projetée sous pression par des gicleurs associés à des balais qui portent contre cette surface et qui sont animés d'un mouvement d'oscillation ou de translation approprié.

La présente invention vise à améliorer encore les performances du dispositif selon ce brevet antérieur et dont les caractéristiques principales sont ainsi rappelées, en proposant un ensemble de conception simple qui permet d'élever de façon notable la température d'une fraction de l'eau contenue dans le réservoir avant qu'elle ne soit projetée sur la surface vitrée intéressée de manière à assurer un nettoyage plus efficace et plus rapide de celle-ci, la quantité d'eau projetée étant immédiatement renouvelée à partir du réservoir pour être instantanément prête à l'emploi.

A cet effet, l'ensemble considéré comporte, en combinaison, d'une part une boîte de dégazage sous pression faisant partie du circuit de refroidissement du moteur et d'autre part, un réservoir d'eau de lavage comportant une chambre principale, ce réservoir étant associé à une pompe de circulation prélevant l'eau et la délivrant à des gicleurs de distribution et de répartition sur les surfaces vitrées du véhicule, l'ensemble comprenant une chambre auxiliaire, de faible volume comparé à celui de la chambre principale du réservoir, l'ensemble étant caractérisé en ce que la boîte et le réservoir sont moins pour partie séparés par un corps creux à double cloison délimitant entre eux un volume isolant thermique fermé sur lui-même et la chambre auxiliaire est en communication permanente avec la chambre pricipale par un orifice de passage prévu en partie basse de ce réservoir à travers la double cloison du corps creux délimitant le volume isolant thermique, la chambre auxiliaire étant logée entre la boîte de dégazage et le corps creux du côté opposé de celui-ci par rapport à la chambre principale, étant en contact direct avec la paroi externe de la boîte de dégazage sur une large partie de celle-ci, et comportant un canal sensiblement vertical pour l'évacuation de l'air introduit lors du remplissage de cette chambre auxiliaire vers la chambre principale du réservoir.

Grâce à ces dispositions, la faible quantité d'eau de lavage introduite dans la chambre auxiliaire à partir de la chambre principale du réservoir, est très rapidement amenée, du fait de son volume réduit, à la température de la boîte de dégazage elle-même par suite du contact direct de cette chambre auxiliaire avec cette dernière, sans perturber le bon fonctionnement du circuit de refroidissement du moteur et en particulier sans occasionner un refroidissement brutal du liquide présent dans celui-ci.

Notamment, le faible volume d'eau dans la chambre auxiliaire est quasi immédiatement porté à la température de la boîte de dégazage, soit à une valeur largement supérieure à celle de l'eau dans la chambre principale du réservoir, de sorte qu'une fois prélevée pour être distribuée aux gicleurs, elle permette un nettoyage plus efficace des surfaces vitrées, cette eau étant en outre renouvelée en permanence dans la chambre auxiliaire grâce à la communication permanente établie entre celle-ci et la chambre principale.

En règle générale, l'invention s'applique dans les meilleures conditions lorsque le volume d'eau de lavage dans le réservoir est compris entre 1,5 et 8 litres, de préférence entre 3 et 6 litres, le volume de la chambre auxiliaire étant de l'ordre de 20 à 40 cc.

D'autres avantages et caractéristiques d'un ensemble de réchauffage de l'eau de lavage des surfaces vitrées d'un véhicule automobile, établi conformément à l'invention, apparaîtront encore à travers la description qui suit d'un exemple de réalisation, donné à titre indicatif et non limitatif, en référence aux dessins annexés sur lesquels :
- La Figure 1 est une vue en coupe transversale de l'ensemble de réchauffage.
- Les Figures 2, 3 et 4 sont des vues en perspective partielle des diverses pièces entrant dans la réalisation de l'ensemble de réchauffage et dont l'assemblage est illustré sur la Figure 1.

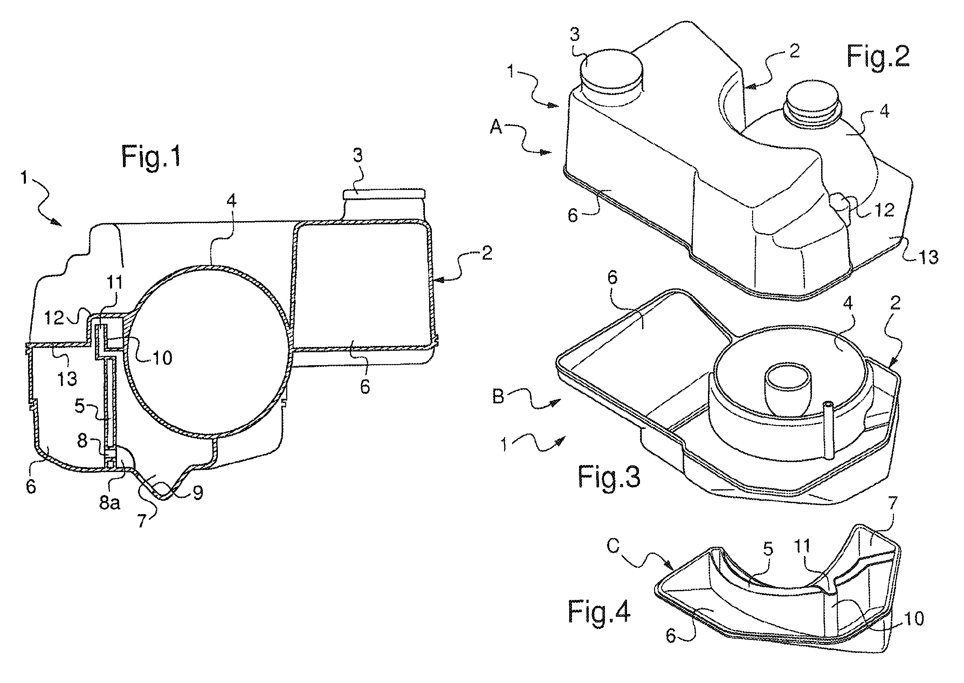

Sur la Figure 1, la référence 1 désigne dans son ensemble le dispositif de réchauffage considéré, lequel comporte principalement un réservoir 2 apte à contenir de l'eau de lavage pour les surfaces vitrées (non représentées) d'un véhicule automobile, la quantité d'eau introduite dans ce réservoir par un bouchon de remplissage 3 prévu à la partie supérieure de celui-ci, représentant un volume de l'ordre de 1,5 à 8 litres, selon les types de véhicule, de préférence de 3 à 6 litres.

Comme déjà décrit de façon détaillée dans le brevet français FR 2 875 763 au nom de la Demanderesse, le réservoir 2 est aménagé de manière à entourer au moins partiellement une boîte de dégazage 4, usuellement à profil sphérique, montée dans le circuit de refroidissement du moteur de ce véhicule, le liquide en circulation étant généralement additionné d'un produit propre à limiter sa tension superficielle.

Le volume de liquide dans le circuit de refroidissement varie également selon le type de véhicule, mais est généralement compris entre 1,5 et 3 litres.

Cette boîte de dégazage 4 assure notamment la séparation entre le liquide et sa vapeur, ou d'autres produits gazeux, voire l'air présent ou introduit dans ce circuit lors de son remplissage, la température à l'intérieur de cette boîte étant plus ou moins rapidement amenée, dès que le moteur fonctionne, à une valeur généralement comprise entre 60 et 80°, selon le type de véhicule, le volume du liquide dans ce circuit étant généralement de l'ordre de 1 à 2 litres.

Conformément à l'invention décrite dans ce brevet antérieur, la boîte de dégazage 4 est séparée du réservoir 2 qui l'entoure sur une fraction substantielle de sa surface par un corps creux à double paroi 5, fermé sur lui-même, le cas échéant placé sous vide et qui assure un isolement thermique convenable entre la boîte et le réservoir, tout en permettant de contrôler le transfert des calories de l'une vers l'autre dans des conditions telles que le fonctionnement du circuit de refroidissement du moteur ne soit pas perturbé.

Dès lors, si l'eau de lavage contenue dans le réservoir 2 est progressivement portée à une température satisfaisante telle que ses propriétés nettoyantes soient sensiblement améliorées, en permettant d'éliminer plus efficacement les salissures déposées et collées sur les surfaces vitrées contre lesquelles cette eau, prélevée dans le réservoir, est projetée sous pression par des gicleurs disposés en regard des balais qui se déplacent contre ces surfaces, on constate cependant que cette amélioration peut être encore plus importante si la température de l'eau est plus élevée, avec dans ce cas une réduction corrélative de la quantité d'alcool ou autre additif ajouté à cette eau de lavage dans le réservoir pour accroître son pouvoir nettoyant.

Dans ce but, le réservoir 2 comporte une chambre principale 6 associée à une' chambre auxiliaire 7, de volume très largement plus limité que celui de la chambre principale, de l'ordre de 20 à 40 cc seulement, cette chambre auxiliaire étant ménagée dans le réservoir tout en étant disposée du côté opposé de la double cloison de séparation 5, donc en contact direct avec la boîte de dégazage 4 dont une partie de la surface externe délimite ainsi cette chambre auxiliaire 7, le niveau de l'eau de lavage dans cette dernière étant toujours disposé en dessous de celui du liquide du liquide du circuit de refroidissement à l'intérieur de la boîte de dégazage.

La chambre auxiliaire 7 communique directement avec la chambre principale 6 par un passage 8 ménagé à la partie inférieure de la double cloison de séparation 5. Un déflecteur 8a est avantageusement prévu devant l'orifice de sortie du passage 8 dans la chambre 7 pour éviter que l'eau à température moins élevée qui provient de la chambre principale 6 ne vienne directement au contact de la paroi de la boîte de dégazage 4 à température largement supérieure en créant sur celle-ci un choc thermique préjudiciable.

Cette chambre auxiliaire 7 est par ailleurs réunie par un conduit de sortie 9 à au moins une pompe d'aspiration (non représentée), qui aspire le liquide contenu dans cette chambre et alimente les gicleurs.

La chambre auxiliaire 7 comporte de plus un canal 10 d'évacuation de l'air éventuellement présent ou introduit lors de son remplissage par l'eau de lavage, ce canal s'étendant verticalement contre la double cloison 5 ou étant intégré à celle-ci et débouchant à son extrémité supérieure ouverte 11 à l'intérieur d'une chicane 12 prévue dans la paroi 13 qui ferme en regard la chambre principale 6 du réservoir 2, de telle sorte que cet air soit renvoyé vers cette dernière.

Avantageusement, le canal 10 comporte des moyens (non représentés), permettant l'échappement de l'air tout en interdisant le passage de l'eau de lavage de la chambre auxiliaire 7 vers la chambre principale 6, ces moyens pouvant consister selon le cas en une membrane perméable à l'air et imperméable à l'eau, ou en un élément mécanique mobile, du genre clapet, bille ou flotteur.

Grâce à l'utilisation d'une chambre principale 6 de grand volume, dans laquelle l'élévation de la température à partir des calories fournies par la boîte de dégazage 4, s'effectue de manière contrôlée, conforme à celle décrite dans le brevet FR 2 878 763, et une chambre auxiliaire 7 de beaucoup plus faible volume, séparée de la chambre principale par la double cloison d'isolement thermique 5, l'eau contenue dans cette chambre auxiliaire, en contact direct avec la boîte de dégazage 4, est quasi immédiatement portée à la température de cette dernière, de sorte que cette eau beaucoup plus chaude, prélevée par la pompe et projetée par les gicleurs sur les surfaces vitrées concernées, en assure un nettoyage largement plus efficace, tout en permettant de limiter la quantité d'alcool ou autre additif contenu dans cette eau, ce qui constitue un facteur appréciable d'amélioration de l'environnement.

Au fur et à mesure que l'eau de lavage est ainsi prélevée dans la chambre auxiliaire 7, elle est immédiatement remplacée à partir de l'eau présente dans la chambre principale 6, qui remplit en permanence cette chambre auxiliaire par l'orifice de communication 8, en même temps que l'air éventuellement introduit est éliminé par le canal 10 et renvoyé par l'extrémité ouverte 11 et la chicane 12 vers cette chambre principale.

Avantageusement, l'ensemble de réchauffage est formé de trois éléments superposés, assemblés mutuellement, ces éléments pouvant être obtenus par usinage ou de préférence par moulage.

Ces trois éléments sont repérés sur les Figures 2 à 4 sous les références A, B, C, les pièces A et B réalisant par leur assemblage la chambre principale 6 du réservoir 2 et, selon deux coquilles hémi- cylindriques accolées, la boîte de dégazage 4.

La pièce C forme, avec la paroi en regard de la coquille inférieure de la boîte de dégazage 4, la chambre auxiliaire 7, munie de la double paroi d'isolation 5 et du canal d'évacuation d'air 10.

Les pièces A et B ont un unique plan de joint commun transversal selon lequel elles sont réunies mutuellement par soudure ou autre moyen de liaison étanche, et englobent la pièce C qu'elles entourent au droit de ce plan.

La structure formée par les pièces A, B et C ainsi assemblées peut être immobilisé vis-à-vis de la caisse du véhicule dans son compartiment moteur à l'aide de tout moyen approprié, de préférence en deux points de fixation seulement (non représentés), prévus l'un sur la pièce A, l'autre sur la pièce B, la pièce C étant maintenue et bloquée en position par les deux autres.

L'un de ces points peut consister en une patte solidaire de la pièce A en partie haute de celle-ci, apte à être fixée par un clip ou similaire permettant un pré positionnement de l'ensemble et un ajustement de celui-ci dans l'espace prévu pour le recevoir, tandis que le second point est ménagé en partie basse de la pièce B et se présente également sous la forme d'une patte transversale, munie avantageusement d'un trou oblong pour le passage et l'ajustement d'une vis ou d'un écrou de blocage.

Bien entendu, il va de soi que l'invention ne se limite pas à l'exemple de réalisation plus spécialement décrit et représenté en référence aux dessins annexés ; elle en embrasse au contraire toutes les variantes décrites par les revendications.

## Revendications

1. Ensemble pour le réchauffage de l'eau de lavage des surfaces vitrées d'un véhicule automobile, qui comporte, en combinaison, d'une part une boîte de dégazage sous pression (4) faisant partie du circuit de refroidissement du moteur et d'autre part, un réservoir (2) d'eau de lavage comportant une chambre principale (6), ce réservoir étant associé à une pompe de circulation prélevant l'eau et la délivrant à des gicleurs de distribution et de répartition sur les surfaces vitrées du véhicule, l'ensemble comprenant une chambre auxiliaire (7), de faible volume comparé à celui de la chambre principale (6) du réservoir **caractérisé en ce que** la boîte et le réservoir sont au moins pour partie séparés par un corps creux à double cloison (5) délimitant entre eux un volume isolant thermique fermé sur lui-même et la chambre auxiliaire (7) est en communication permanente avec la chambre principale par un orifice de passage (8) prévu en partie basse de ce réservoir à travers la double cloison (5) du corps creux délimitant le volume isolant thermique, la chambre auxiliaire (7) étant logée entre la boîte de dégazage et le corps creux du côté opposé de celui-ci par rapport à la chambre principale, étant en contact direct avec la paroi externe de la boîte de dégazage sur une large partie de celle-ci, et comportant un canal (10) sensiblement vertical pour l'évacuation de l'air introduit lors du remplissage de cette chambre auxiliaire (7) vers la chambre principale (6) du réservoir (2).

2. Ensemble de réchauffage selon la revendication 1, **caractérisé en ce que** le volume d'eau de lavage dans le réservoir (2) est compris entre 1,5 et 8 litres, de préférence de 3 à 6 litres, le volume de la chambre auxiliaire (7) étant de l'ordre de 20 à 40 cc.

3. Ensemble de réchauffage selon l'une des revendications 1 ou 2, **caractérisé en ce que** le canal (10) d'évacuation de l'air s'étend contre la double cloison (5) ou est intégré dans celle-ci.

4. Ensemble de réchauffage selon l'une quelconque des revendications 1 à 3, **caractérisé en ce que** le canal (10) d'évacuation de l'air est agencé de manière à déboucher dans une chicane de communication (12) avec la chambre principale (6).

5. Ensemble de réchauffage selon l'une quelconque des revendications 1 à 4, **caractérisé en ce que** le canal (8) d'évacuation de l'air est pourvu de moyens d'obstruction, perméables à l'air et imperméables à l'eau, du genre d'une membrane ou d'un organe mobile du type clapet, bille ou flotteur.

## Claims

1. A set for heating the washing water of the glass surfaces of a motor vehicle, which comprises, in combination, on the one hand a degassing box under pressure (4) forming part of the cooling circuit of the motor and on the other hand a tank (2) of washing water comprising a main chamber (6), this tank being associated with a circulation pump withdrawing the water and delivering it to jets for distribution and apportioning on the glass surfaces of the vehicle, the set comprising an auxiliary chamber (7) which is small in volume compared with that of the main chamber (6) of the tank, **characterized in that** the box and the tank are at least partially separated by a hollow double-partitioned body (5) delimiting between them a closed thermal insulating space and the auxiliary chamber (7) is in permanent communication with the main chamber via a passage orifice (8) provided in the lower part of this tank through the double partition (5) of the hollow body delimiting the thermal insulating space, the auxiliary chamber (7) being housed between the degassing box and the hollow body on the side opposite thereto in relation to the main chamber, being in direct contact with the external wall of the degassing box over a large part thereof, and comprising a substantially vertical duct (10) for the evacuation of the air introduced during the filling of this auxiliary chamber (7) towards the main chamber (6) of the tank (2).

2. The heating set according to Claim 1, **characterized in that** the volume of washing water in the tank (2) is comprised between 1.5 and 8 litres, preferably from 3 to 6 litres, the volume of the auxiliary chamber (7) being in the order to 20 to 40 cc.

3. The heating set according to one of Claims 1 or 2, **characterized in that** the duct (10) for evacuation of the air extends against the double partition (5) or it integrated therein.

4. The heating set according to any one of Claims 1 to 3, **characterized in that** the duct (10) for evacuation of the air is arranged so as to open out in a communication baffle (12) with the main chamber (6).

5. The heating set according to any one of Claims 1 to 4, **characterized in that** the duct (8) for evacuation of air is provided with obstruction means, permeable to air and impermeable to water, of the type with a membrane or a movable member of the valve, ball or float type.

## Patentansprüche

1. Einheit zum Aufwärmen des Waschwassers der verglasten Flächen eines Kraftfahrzeugs, die kombiniert einerseits einen Entgasungskasten unter Druck (4), der zum Kühlkreislauf des Motors gehört, und, andererseits, einen Waschwasserbehälter (2) aufweist, der eine Hauptkammer (6) umfasst, aufweist, wobei dieser Behälter mit einer Umwälzpumpe verbunden ist, die Wasser entnimmt und es zu Düsen zum Verteilen und Ausbreiten auf den verglasten Flächen des Kraftfahrzeugs liefert, wobei die Einheit eine Hilfskammer (7) mit einem Volumen aufweist, das im Vergleich zu dem der Hauptkammer (6) des Behälters gering ist, **dadurch gekennzeichnet, dass** der Kasten und der Behälter mindestens zum Teil durch einen doppelwandigen Hohlkörper (5) getrennt sind, der zwischen ihnen ein Wärme isolierendes Volumen, das auf sich selbst geschlossen ist, abgrenzt, und dass die Hilfskammer (7) ständig mit der Hauptkammer über eine Durchgangsöffnung (8) kommuniziert, die im unteren Teil dieses Behälters über die doppelte Wand (5) des Hohlkörpers, der das Wärme isolierende Volumen abgrenzt, vorgesehen ist, wobei die Hilfskammer (7) zwischen dem Entgasungskasten und dem Hohlkörper auf dessen entgegen gesetzter Seite in Bezug zu der Hauptkammer untergebracht ist und mit der Außenwand des Entgasungskastens auf einem großen Teil dieses in direktem Kontakt ist und einen im Wesentlichen vertikalen Kanal (10) zum Evakuieren der Luft, die beim Füllen dieser Hilfskammer (7) eingeführt wird, zu der Hauptkammer (6) des Behälters (2) aufweist.

2. Einheit zum Aufwärmen nach Anspruch 1, **dadurch gekennzeichnet, dass** das Waschwasservolumen in dem Behälter (2) zwischen 1,5 und 8 Liter, vorzugsweise 3 bis 6 Liter beträgt, wobei das Volumen der Hilfskammer (7) in der Größenordnung von 20 bis 40 cm3 beträgt.

3. Einheit zum Aufwärmen nach einem der Ansprüche 1 oder 2, **dadurch gekennzeichnet, dass** sich der Kanal (10) zum Ableiten der Luft gegen die doppelte Wand (5) erstreckt oder in diese eingebaut ist.

4. Einheit zum Aufwärmen nach einem der Ansprüche 1 bis 3, **dadurch gekennzeichnet, dass** der Kanal (10) zum Ableiten der Luft derart eingerichtet ist, dass er in ein Lenkblech zur Kommunikation (12) mit der Hauptkammer (6) mündet.

5. Einheit zum Aufwärmen nach einem der Ansprüche 1 bis 4, **dadurch gekennzeichnet, dass** der Kanal (8) zum Ableiten der Luft mit Verschlussmitteln versehen ist, die luftdurchlässig und wasserundurchlässig sind, des Typs einer Membran oder eines beweglichen Organs des Typs Klappe, Kugel oder Schwimmer.
